# EUROPEAN PATENT SPECIFICATION

(11) **EP 4 642 666 B1**
(45) Date of publication and mention of the grant of the patent: **15.04.2026**
(21) Application number: 23748850.7
(22) Date of filing: 18.07.2023
(51) Int. Cl.: B60L 53/10, B60L 53/14, B60L 53/31, B60L 53/67

(54) **INTEGRATED PREFABRICATED POWER CHARGING SYSTEM FOR ELECTRIC VEHICLES AND PLUG-IN HYBRID VEHICLES CONNECTED DIRECTLY TO MEDIUM VOLTAGE ELECTRICAL NETWORK AND A METHOD FOR CHARGING AN ELECTRIC OR HYBRID VEHICLE**
INTEGRIERTES VORGEFERTIGTES LADESYSTEM FÜR ELEKTROFAHRZEUGE UND PLUG-IN-HYBRIDFAHRZEUGE MIT DIREKTEM MITTELSPANNUNGSNETZ UND LADEVERFAHREN
SYSTÈME DE CHARGE ÉLECTRIQUE PRÉFABRIQUÉ INTÉGRÉ POUR VÉHICULES ÉLECTRIQUES ET VÉHICULES HYBRIDES ENFICHABLES CONNECTÉS DIRECTEMENT À UN RÉSEAU ÉLECTRIQUE MOYENNE TENSION ET PROCÉDÉ DE CHANGEMENT D'UN VÉHICULE ÉLECTRIQUE OU HYBRIDE

(43) Date of publication of application: 05.11.2025
(73) Proprietor: Energobit S.a., 400285 Cluj-Napoca (RO)
(72) Inventor: GADOLA, Stefan, 400285 Cluj-Napoca (RO); PETER, Pal, 400285 Cluj-Napoca (RO); POP, Florin Mircea, 400285 Cluj-Napoca (RO); SOCEA, Ioan, 400285 Cluj-Napoca (RO); TEREC, Adrian, 400285 Cluj-Napoca (RO)
(74) Representative: Petculescu, Ana-Maria
(86) International application number: PCT/IB2023/057339
(87) International publication number: WO 2025/017353

(56) References cited:
- WO-A1-2022/231737
- WO-A1-2023/030665
- GB-A- 2 600 390
- US-A1- 2020 055 416
- US-A1- 2023 011 299

## Description

### Field of the Invention

The present invention refers to an integrated prefabricated power charging system connected directly to medium voltage electrical network, and a method for charging an electric or a plug-in hybrid vehicle.

### State of the art

An electric vehicle is often referred to using initials EV; similarly, a plug-in hybrid vehicle is referred to using the initials PHEV. In the following, both initials and full names of the vehicles will be used, interchangeably, together with the generic word vehicle.

As known, an electric vehicle EV is a vehicle that uses one or more electric motors for propulsion. Nowadays road and marine vehicles are available that are equipped with an onboard battery pack to supply power to the electric motor(s). Among common electric vehicles there are, for instance, electric bicycles, automobiles, motorbikes, trucks, trains, vans and buses. Recently, also electric airplanes are being tested.

The battery pack of an electric vehicle constitutes an onboard storage of chemical energy that is converted into electricity to achieve propulsion; therefore, a battery pack must be periodically recharged to guarantee a given range for the vehicle.

Charging the battery pack of an electric vehicle is normally achieved by connecting the battery pack to power source, with a cable, when the vehicle is parked.

A plug-in hybrid electric vehicle PHEV is a hybrid electric vehicle, featuring both an electric motor and an internal combustion engine, whose battery pack can be recharged internally, by a generator powered by the internal combustion engine, and/or by plugging a charging cable into an external electric power source. Most PHEVs are passenger cars, but there are also PHEV versions of sports cars, commercial vehicles and vans, utility trucks, buses, trains, motorcycles, mopeds, and even military vehicles.

In a nutshell, both EVs and PHEVs feature a battery pack that has to be charged by plugging a charging cable into an external dedicated power source, that is referred in the following as charging station.

Two main types of charging stations are known: AC charging stations and DC charging stations. Both types are usually manufactured as stand-alone columns, wherein a single column powers a single vehicle at each time. Usually, stand-alone charging stations are placed in the nearby of one stall for the vehicle, meaning that one stall and the corresponding charging station define a charging bay that can be used by one user at the time. Public charging bays are typically found street-side or at retail shopping centers, and in other parking areas. Private charging bays are typically found at residences, workplaces, shops and hotels.

Batteries can only be charged with direct current DC electric power, while most electricity is delivered from the power grid as alternating currentAC. For this reason, most electric vehicles have a built-in AC-to-DC converter, commonly known as "onboard charger".

At an AC charging station, AC power from the grid is supplied to the built-in AC/DC converter of the vehicle, which produces DC power to charge the battery.

DC charging stations facilitate higher power charging (which requires much larger AC-to-DC converters) by including the converter into the charging station instead of the vehicle. The station then supplies DC power to the vehicle directly, bypassing the onboard built-in AC/DC converter.

Thanks to the built-in AC/DC converter, most EVs can accept both AC and DC power.

Charging stations provide connectors that conform to a variety of international standards. DC charging stations are commonly equipped with multiple connectors to be able to charge a wide variety of vehicles that utilize competing standards. The charging cable is plugged into the charging station and into the EV or PHEV.

Currently, in order to ensure a large number of charging points for electric vehicles and plug-in hybrid vehicles, it is necessary to install a classic transformer substation that transform AC medium voltage to AC low-voltage, install low-voltage AC electrical networks, install separate charging stations, with the related constructive elements and specific loading equipment, resulting cost barriers, increased approval and execution time, which leads to reduced availability and reduced commercial attractiveness.

It also has to be noted that the charging time of EVs and PHEVs can vary depending on a number of factors like, for example, the capacity of the battery pack, the temperature of the battery pack, the level of charge of the battery pack when charging starts, the type of charging station, etc. Regardless of these considerations, it is evident that for as long as the bay remains occupied by a vehicle, no other vehicles can be charged at the same charging station and that a single charging station/column cannot charge two vehicles at the same time.

In view of the above, the following drawbacks can be identified in the available charging stations.

First of all, existing charging stations do require urbanization work, due to the necessity of creating the charging bay by providing the stall for the vehicle, the installation of the corresponding charging column, trenching in the ground the electric cables for powering the charging column, etc. Therefore, installing several charging stations is normally expensive and time consuming.

Another drawback of the known solutions is related to the charging speed, that is itself linked to the available power. In urban areas, public charging bays are usually supplied by the municipal low-voltage AC electric grid, at 400 Volts; private charging bays are usually supplied by home electric grid, at 220 Volts. Also, there is a large number of existing consumers to be served. Consequently, the maximum power that the charging cable can deliver to vehicles is not sufficient to charge several vehicles at the same time.

On the other hand, in non-congested areas but located far from urban areas (eg highways, national roads, touristic areas, protected areas, rural areas, shopping centers, industrial parks, nautical centers fuel stations, parking spaces for vehicles such as, but not limited to, cars, vans, commercial vehicles, buses, etc.), low-voltage alternating current (AC) electric networks are not available or there is a limitation of power availability. The connection to the electric network of the classic charging equipment electric vehicles (EV) and plug-in hybrid vehicles (PHEV) cannot be ensured.

In view of the above, known solutions somehow lack versatility.

On one side, known solutions do not allow to quickly set up a charging bay without prior planning and providing urbanization work, while in some situations there is the need to have a temporary charging bay set up in few hours, like during a social event or happening, or in the nearby of a temporary working site, etc., that can be then dismantled without affecting the environment.

On another side, the need is felt for a wider distribution of charging stations, that can be easily installed in any area, including those where only medium voltage electrical network is available, that are more versatile in terms of variety of vehicles that can be charged at different speed, for instance charging stations that may provide both fast charging of electric cars or trucks and slow charging of electric scooters.

US2020/055416A1 discloses a system for charging electric vehicles EVs and/or plug-in hybrid vehicles PHEVs.

### Summary of the invention

The present invention is set out in the independent claims whereas preferred embodiments and further implementations are outlined in the dependent claims, description and figures.

### Brief list of the figures

Further characteristics and advantages of the invention will be more evident by the review of the following specification of a preferred, but not exclusive, embodiment, which is depicted for illustration purposes only and without limitation, with the aid of the attached drawings, in which:

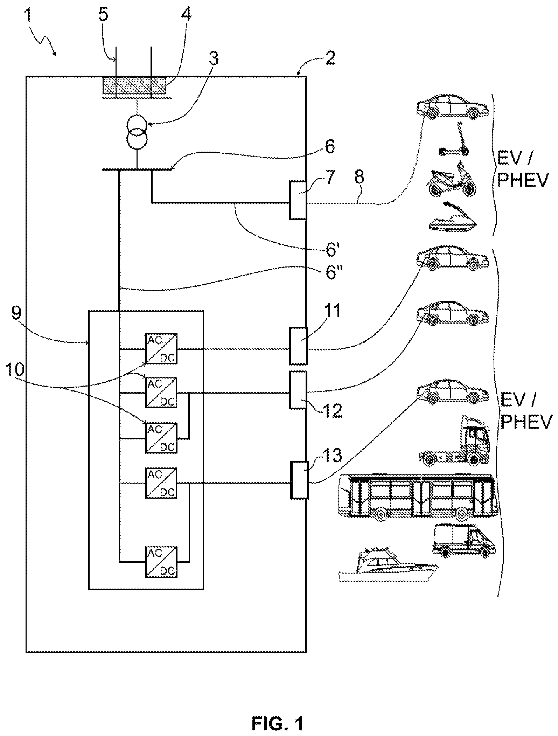

- figure 1 is a schematic view, and an electrical scheme, of a charging system according to the present invention;

### Detailed description of the invention

Referring to figure 1, with reference 1 an integrated prefabricated charging system according to the present invention is shown in a schematic way. The charging system is preassembled and enclosed in a prefabricated structure 2. Having the system 1 preassembled in a structure 2 makes the system prefabricated.

Within the structure 2 a transformer 3 is arranged, which is connected to medium voltage switchgears 4 that, in turn, are connectable to a medium voltage electrical network, through cables 5 derived from a pick-up point of the network. The medium voltage electrical network can be public or private; for instance, the voltage between cables 5 levels from 1kV to 35kV according to IEC, and from 1 kV to 100 kV in general.

The transformer 3 is configured to reduce the voltage level from medium voltage to low voltage, meaning that it is a medium voltage / low voltage transformer 3. A single transformer 3 is shown in figure 1 but, in general, the system 1 may be equipped with more than one transformer, for example when a backup transformer 3 is desired to guarantee continuity of service. If more transformers 3 are present, according to the present embodiment they are all integrated within the structure 2.

Also the medium voltage switchgears 4 are integrated within the prefabricated structure 2, in order to stay protected from the environment outside the structure 2. During installation, an operator authorized to access the prefabricated structure 2 plugs cables 5 into the medium voltage switchgears 4 to power the transformer 3.

The transformer 3 supplies a low voltage electrical internal grid 6 which is integrated in system 1, i.e. is also internal to and integral with the structure 2. This low voltage electrical internal grid 6 can be defined by low voltage distribution components and cables and/or busbars 6', 6". The voltage made available by the low voltage electrical internal grid 6 is below 1000V.

One branch of the low voltage electrical internal grid 6 directly supplies a first connector or plug 7 that remains accessible to users from one side of the structure 2. Connector 7 provides connection for a cable 8 to charge an electric vehicle EV or a hybrid vehicle PHEV, like a car, a van, a scooter, a ski jet, a truck, a bus, even an airplane, directly in AC current, since the vehicle EV / PHEV is provided with a built-in AC-to-DC converter. Cable 8 is provided by the user and can be connected/disconnected.

Not all EVs/PHEVs are equipped with an onboard AC-to-DC converter. Therefore, the system may comprise a DC unit 9 integrated in the prefabricated structure 2, wherein the DC unit 9 is powered by the low voltage electrical internal grid 6 and comprises one or more AC-to-DC converters 10 arranged according to different electrical schemes.

In the example shown in figure 1, one AC-to-DC converter 10 powers a connector or plug 11 with direct current DC and four AC-to-DC converters 10 are arranged in parallel, as two groups of two AC-to-DC converters 10 each, wherein each group of two AC-to-DC converters 10 powers a corresponding connector or plug 12, 13 with DC current.

As explained above, the electrical configuration of system 1 permits to charge a variety of EVs and/or PHEVs, those that have their own AC/DC converter and those that have not.

By having a plurality of plugs/connectors 7 and 11-13, and by being supplied with medium voltage current by cables 5, the system 1 allows for charging vehicles, one after another or at the same time, on DC current or AC current, at regular speed or fast speed or ultra-fast speed, being therefore highly versatile.

The structure 2 is electrically isolated from the ground but the system 1 is itself grounded when is set up for running. Moreover, the structure 2 is physically protected from the external environment in order to prevent short-circuits caused by rain.

With reference to figure 1, the system 1, is integrated since all the components needed to operate the system are prearranged in the structure 2. Moreover, the system 1, is also prefabricated, meaning that all the components described above are also correctly connected and arranged one with respect to another in the structure 2 so that the operator does not have to work out connections, wiring and tests once the system 1 has been delivered to destination.

Certifications required by law can be obtained for the system 1, once built at the factory, and kept after transportation, without necessity to obtain new certifications.

Since the structure 2 has standard dimensions, it can be transported on trucks, ships and even helicopters. Once delivered, the operator achieves earthing and connection to a pick-up point of the medium voltage network. Then, management is achieved remotely and wireless, through the electronic control unit 15.

Logistics and operation are, therefore, extremely simple and setting up of the system 1, 1' can be obtained with little staff and only one skilled person.

In another embodiment (not shown), the system 1 is a modular system. At the same time, the system 1, can be interconnected with similar systems 1 to obtain the desired layout of charging bays. The system 1 according to a modular embodiment is provided with supplementary cables or lines to allow connection of AC/DC converters 10 of one system 1 to connectors 11-13 or AC/DC converters 10 of another system 1. Moreover, a modular system 1 may use its low voltage electrical internal grid 6 to power connectors 7 of another system 1'. This modular configuration can also be used to provide some backups.

## Claims

1. A system (1) for charging electric vehicles EVs and/or plug-in hybrid vehicles PHEVs, the system (1) being connectable directly to a medium voltage electrical network and providing direct current DC and alternate current AC charging of EVs and/or PHEVs through plugs or connectors (7, 11-13), wherein the system (1) is an integrated and prefabricated apparatus comprising:
- said plugs or connectors (7, 11-13);
- at least one medium voltage / low voltage transformer (3) that transforms AC medium voltage in AC low voltage,
- means (4, 5) for connecting said at least one transformer (3) to said medium voltage electrical network,
- a low voltage electrical internal grid (6) powered by the transformer (3);
- a DC power unit (9) provided with one or more AC/DC converters (10) to convert alternating current AC in direct current DC, wherein said AC/DC converters (10) are electrically interposed between said internal low voltage electrical internal grid (6) and said one or more plugs or connectors (7, 11-13), wherein at least one (11-13) of said plugs or connectors (7, 11-13) connects a corresponding vehicle to said DC power unit (9), for DC current charging, and at least another one (7) of said plugs or connectors (7, 11-13) connects a corresponding vehicle to said low voltage electrical internal grid (6), for AC current charging
and wherein the charging system (1) is a prefabricated integral or modular structure isolated from the external environment, being built as a transportable structure (2) provided with earthing means (16).

2. The charging system (1) according to claim 1, wherein at least two of said one or more AC/DC converters (10) are connected in parallel to one plug or connector (12, 13), for fast direct current DC charging EVs or PHEVs.

3. The charging system (1) according to any previous claim, wherein said means (4) for connecting said at least one transformer (3) to the medium voltage electrical network comprises medium voltage switchgears.

4. The charging system (1) according to any previous claim, comprising a control unit (15) with an interface for wired/wireless connection to an internet network, and at least one payment interface for users.

5. The charging system (1) according to claim 4, wherein said one or more plugs or connectors (7, 11-13) are arranged on the external walls of the transportable structure (2) or are placed at distance from the transportable structure (2), being wired to it.

6. The charging system (1) according to any previous claim, comprising means for connecting to another charging system (1) according to any previous claim, in particular means to connect the AC/DC converters (10) according to a desired electrical scheme, in a modular way.

7. Use of the charging system (1) according to any previous claim to charge the battery pack of one or more road, nautical or aerial electric vehicles EVs or plug-in hybrid vehicles PHEVs, in different moments or at the same time.

8. Use of the charging system (1) according to any previous claims 1-6 to charge the battery pack of one or more road, nautical or aerial electric vehicles EVs or plug-in hybrid vehicles PHEVs by connecting the charging system directly to a medium voltage electrical network having the voltage level from 1kV to 35kV according to IEC and 1 kV to 100 kV in general.

9. A method for charging road, nautical or aerial electric vehicles EVs and plug-in hybrid vehicles PHEVs, **characterizing by** providing a charging system (1, 1') which is a prefabricated integral or modular structure isolated from the external environment, being built as a transportable structure (2) provided with earthing means (16) comprising:
- plugs or connectors (7, 11-13);
- at least one medium voltage / low voltage transformer (3) that transforms AC medium voltage current in AC low voltage current,
- means (4, 5) for connecting said at least one transformer (3) directly to said medium voltage electrical network having the voltage level from 1kV to 35kV according to IEC and 1 kV to 100 kV in general,
- a low voltage electrical internal grid (6) powered by the transformer (3) and powering said plugs or connectors (7, 11-13);
- a DC power unit (9) provided with one or more AC/DC converters (10) to convert alternating current AC in direct current DC,
the method comprising:
- connecting said at least one transformer (3) to said medium voltage electrical network,
- powering said low voltage electrical internal grid (6) and at least one (7) of said plugs or connectors (7, 11-13) with AC low voltage current by the transformer (3);
- arranging said AC/DC converters (10) electrically interposed between said low voltage electrical internal grid (6) and at least another one (11-13) of said plugs or connectors (7, 11-13), and
- connecting one or more electric vehicles EVs and plug-in hybrid vehicles PHEVs, in different moments or at the same time, to a corresponding plug or connector (7, 11-13) to achieve charging of each vehicle in AC low voltage current or in DC current.

## Patentansprüche

1. System (1) zum Laden von Elektrofahrzeugen (EVs) und/oder Plug-in-Hybrid-Fahrzeugen (PHEVs), wobei das System (1) direkt an ein Mittelspannungsnetz angeschlossen werden kann und das Laden von EVs und/oder PHEVs mit Gleichstrom (DC) und Wechselstrom (AC) über Stecker oder Steckverbinder (7, 11-13) ermöglicht, wobei das System (1) eine einheitliche und vorgefertigte Vorrichtung ist, umfassend:
- die Stecker oder Steckverbinder (7, 11-13);
- mindestens einen Mittelspannungs-/Niederspannungstransformator (3), der Wechselstrom-Mittelspannung in Wechselstrom-Niederspannung umwandelt,
- Mittel (4, 5) zum Verbinden des mindestens eines Transformators (3) mit dem Mittelspannungsnetz,
- ein vom Transformator (3) gespeistes internes elektrisches Niederspannungsnetz (6);
- eine Gleichstromversorgungseinheit (9) mit einem oder mehreren Wechselstrom-/Gleichstromwandlern (10) zum Umwandeln von Wechselstrom (AC) in Gleichstrom (DC), wobei die Wechselstrom-/Gleichstromwandler (10) elektrisch zwischen dem internen elektrischen Niederspannungsnetz (6) und dem einen oder den mehreren Steckern oder Steckverbindern (7, 11-13) geschaltet sind, wobei mindestens einer (11-13) der Stecker oder Steckverbinder (7, 11-13) ein entsprechendes Fahrzeug mit der Gleichstromversorgungseinheit (9) zum Laden mit Gleichstrom verbindet und mindestens ein weiterer (7) der Stecker oder Steckverbinder (7, 11-13) ein entsprechendes Fahrzeug mit dem internen elektrischen Niederspannungsnetz (6) zum Laden mit Wechselstrom verbindet
und wobei das Ladesystem (1) eine vorgefertigte einheitliche oder modulare Struktur ist, die von der Außenumgebung isoliert ist und als transportfähige Struktur (2) mit Erdungsmitteln (16) gebaut ist.

2. Ladesystem (1) nach Anspruch 1, wobei mindestens zwei der einen oder mehreren Wechselstrom-/Gleichstromwandler (10) parallel zu einem Stecker oder Steckverbinder (12, 13) geschaltet sind, um Elektrofahrzeuge oder Plug-in-Hybrid-Fahrzeuge schnell und unmittelbar mit Gleichstrom zu laden.

3. Ladesystem (1) gemäß einem der vorhergehenden Ansprüche, wobei die Mittel (4) zum Verbinden des mindestens eines Transformators (3) mit dem Mittelspannungsnetz Mittelspannungsschaltanlagen umfassen.

4. Ladesystem (1) gemäß einem der vorhergehenden Ansprüche, umfassend eine Steuereinheit (15) mit einer Schnittstelle für eine kabelgebundene/kabellose Verbindung zu einem Internetnetzwerk und mindestens eine Zahlungsschnittstelle für Benutzer.

5. Ladesystem (1) nach Anspruch 4, wobei der eine oder die mehreren Stecker oder Steckverbinder (7, 11-13) an den Außenwänden der transportfähigen Struktur (2) angeordnet sind oder in einem Abstand von der transportfähigen Struktur (2) angeordnet und mit dieser verdrahtet sind.

6. Ladesystem (1) gemäß einem der vorhergehenden Ansprüche, umfassend Mittel zum Verbinden mit einem anderen Ladesystem (1) gemäß einem der vorhergehenden Ansprüche, insbesondere Mittel zum Verbinden der Wechselstrom-/Gleichstromwandler (10) gemäß einem gewünschten elektrischen Schaltplan auf modulare Weise.

7. Verwendung des Ladesystems (1) gemäß einem der vorhergehenden Ansprüche zum Laden des Akkupacks eines oder mehrerer elektrischer Straßen-, Wasser- oder Luftfahrzeuge (EVs) oder Plug-in-Hybrid-Fahrzeuge (PHEVs) zu unterschiedlichen Zeitpunkten oder gleichzeitig.

8. Verwendung des Ladesystems (1) gemäß einem der vorhergehenden Ansprüche 1 bis 6 zum Laden des Akkupacks eines oder mehrerer elektrischer Straßen-, Wasser- oder Luftfahrzeuge (EVs) oder Plug-in-Hybrid-Fahrzeuge (PHEVs) durch direkten Anschluss des Ladesystems an ein Mittelspannungsnetz mit einer Spannung von 1 kV bis 35 kV gemäß IEC und 1 kV bis 100 kV im Allgemeinen.

9. Verfahren zum Laden von elektrischen Straßen-, Wasser- oder Luftfahrzeugen (EVs) und Plug-in-Hybrid-Fahrzeugen (PHEVs), **gekennzeichnet durch** die Bereitstellung eines Ladesystems (1, 1'), das eine vorgefertigte einheitliche oder modulare Struktur ist, die von der Außenumgebung isoliert ist und als transportfähige Struktur (2) mit Erdungsmitteln (16) aufgebaut ist, umfassend:
- Stecker oder Steckverbinder (7, 11-13);
- mindestens einen Mittelspannungs-/Niederspannungstransformator (3), der Wechselstrom-Mittelspannung in Wechselstrom-Niederspannung umwandelt,
- Mittel (4, 5) zum direkten Anschluss des mindestens eines Transformators (3) an das Mittelspannungsnetz mit einer Spannung von 1 kV bis 35 kV gemäß IEC und 1 kV bis 100 kV im Allgemeinen,
- ein vom Transformator (3) gespeistes internes elektrisches Niederspannungsnetz (6) das die Stecker oder Steckverbinder (7, 11-13) mit Strom versorgt;
- eine Gleichstromversorgungseinheit (9) mit einem oder mehreren Wechselstrom-/Gleichstromwandlern (10) zur Umwandlung von Wechselstrom (AC) in Gleichstrom (DC),
wobei das Verfahren folgende Schritte umfasst:
- Verbinden des mindestens eines Transformators (3) mit dem elektrischen Mittelspannungsnetz,
- Versorgen des internen elektrischen Niederspannungsnetzes (6) und mindestens eines (7) der Stecker oder Steckverbinder (7, 11-13) mit Wechselstrom-Niederspannung durch den Transformator (3);
- Anordnen der Wechselstrom-/Gleichstromwandler (10) zwischen dem internen elektrischen Niederspannungsnetz (6) und mindestens einem weiteren (11-13) der Stecker oder Steckverbinder (7, 11-13), sodass sie elektrisch dazwischengeschaltet sind, und
- Verbinden eines oder mehrerer Elektrofahrzeuge (EVs) und Plug-in-Hybrid-Fahrzeuge (PHEVs), zu unterschiedlichen Zeitpunkten oder gleichzeitig, mit einem entsprechenden Stecker oder Steckverbinder (7, 11-13), um jedes Fahrzeug mit Wechselstrom-Niederspannung oder Gleichstrom aufzuladen.

## Revendications

1. Système (1) pour recharger des véhicules électriques (VE) et/ou des véhicules hybrides rechargeables (VHR), le système (1) pouvant être connecté directement à un réseau électrique moyenne tension et fournissant une recharge en courant continu (CC) et en courant alternatif (CA) des VE et/ou des VHR par le biais de prises ou de connecteurs (7, 11-13), dans lequel le système (1) est un appareil intégré et préfabriqué comprenant :
- lesdites prises ou connecteurs (7, 11-13) ;
- au moins un transformateur moyenne tension/basse tension (3) qui transforme le courant alternatif moyenne tension en courant alternatif basse tension,
- des moyens (4, 5) pour connecter ledit au moins un transformateur (3) audit réseau électrique moyenne tension,
- un réseau électrique interne basse tension (6) alimenté par le transformateur (3) ;
- une unité d'alimentation en courant continu (9) équipée d'un ou plusieurs convertisseurs CA/CC (10) pour convertir le courant alternatif CA en courant continu CC, lesdits convertisseurs CA/CC (10) étant interposés électriquement entre ledit réseau électrique interne à basse tension (6) et ladite ou lesdites prises ou connecteurs (7, 11-13), dans lequel au moins une (11-13) desdites prises ou connecteurs (7, 11-13) connecte un véhicule correspondant à ladite unité d'alimentation en courant continu (9), pour une charge en courant continu, et au moins une autre (7) desdites prises ou connecteurs (7, 11-13) connecte un véhicule correspondant audit réseau électrique interne basse tension (6), pour une charge en courant alternatif
et dans lequel le système de charge (1) est une structure préfabriquée intégrale ou modulaire isolée de l'environnement extérieur, construite comme une structure transportable (2) pourvue de moyens de mise à la terre (16).

2. Système de charge (1) selon la revendication 1, dans lequel au moins deux desdits convertisseurs CA/CC (10) sont connectés en parallèle à une prise ou un connecteur (12, 13), pour la charge rapide en courant continu CC de véhicules électriques ou de véhicules électriques hybrides rechargeables.

3. Système de recharge (1) selon l'une quelconque des revendications précédentes, dans lequel ledit moyen (4) pour connecter ledit au moins un transformateur (3) au réseau électrique moyenne tension comprend des appareillages de commutation moyenne tension.

4. Système de recharge (1) selon l'une quelconque des revendications précédentes, comprenant une unité de commande (15) avec une interface pour une connexion filaire/sans fil à un réseau Internet, et au moins une interface de paiement pour les utilisateurs.

5. Le système de recharge (1) selon la revendication 4, dans lequel lesdites une ou plusieurs prises ou connecteurs (7, 11-13) sont disposés sur les parois externes de la structure transportable (2) ou sont placés à distance de la structure transportable (2), en étant câblés à celle-ci.

6. Système de recharge (1) selon l'une quelconque des revendications précédentes, comprenant des moyens pour se connecter à un autre système de recharge (1) selon l'une quelconque des revendications précédentes, en particulier des moyens pour connecter les convertisseurs CA/CC (10) selon un schéma électrique souhaité, de manière modulaire.

7. Utilisation du système de charge (1) selon l'une quelconque des revendications précédentes pour charger la batterie d'un ou plusieurs véhicules électriques routiers, nautiques ou aériens (VE) ou véhicules hybrides rechargeables (VHR), à différents moments ou simultanément.

8. Utilisation du système de charge (1) selon l'une quelconque des revendications précédentes 1 à 6 pour charger le bloc-batterie d'un ou plusieurs véhicules électriques routiers, nautiques ou aériens (VE) ou véhicules hybrides rechargeables (VHR) en connectant le système de charge directement à un réseau électrique moyenne tension ayant un niveau de tension compris entre 1 kV et 35 kV selon la norme CEI et entre 1 kV et 100 kV en général.

9. Procédé pour recharger des véhicules électriques routiers, nautiques ou aériens (VE) et des véhicules hybrides rechargeables (VHR), **caractérisé en ce qu'**il prévoit un système de recharge (1, 1') qui est une structure préfabriquée intégrale ou modulaire isolée de l'environnement extérieur, construite comme une structure transportable (2) équipée de moyens de mise à la terre (16) comprenant :
- des prises ou connecteurs (7, 11-13) ;
- au moins un transformateur moyenne tension/basse tension (3) qui transforme le courant alternatif moyenne tension en courant alternatif basse tension,
- des moyens (4, 5) pour connecter ledit au moins un transformateur (3) directement audit réseau électrique moyenne tension ayant un niveau de tension compris entre 1 kV et 35 kV selon la norme CEI et entre 1 kV et 100 kV en général,
- un réseau électrique interne basse tension (6) alimenté par le transformateur (3) et alimentant lesdites prises ou connecteurs (7, 11-13) ;
- une unité d'alimentation en courant continu (9) équipée d'un ou plusieurs convertisseurs CA/CC (10) pour convertir le courant alternatif CA en courant continu CC,
le procédé comprenant :
- connecter ledit au moins un transformateur (3) audit réseau électrique moyenne tension,
- alimenter ledit réseau électrique interne basse tension (6) et au moins une (7) desdites prises ou connecteurs (7, 11-13) en courant alternatif basse tension par le transformateur (3) ;
- disposer lesdits convertisseurs CA/CC (10) électriquement interposés entre ledit réseau électrique interne basse tension (6) et au moins une autre (11-13) desdites prises ou connecteurs (7, 11-13), et
- connecter un ou plusieurs véhicules électriques (VE) et véhicules hybrides rechargeables (VHR), à des moments différents ou simultanément, à une prise ou un connecteur correspondant (7, 11-13) afin de permettre la recharge de chaque véhicule en courant alternatif à basse tension ou en courant continu.
